# EUROPÄISCHE PATENTSCHRIFT

(11) **EP 3 146 585 B1**
(45) Veröffentlichungstag und Bekanntmachung des Hinweises auf die Patenterteilung: **10.10.2018**
(21) Anmeldenummer: 15744553.7
(22) Anmeldetag: 29.07.2015
(51) Int. Cl.: H01M 8/10, H01M 4/92, H01M 8/02

(54) **BRENNSTOFFZELLENANORDNUNG UND VERFAHREN ZUM BETREIBEN EINER BRENNSTOFFZELLENANORDNUNG**
FUEL CELL ASSEMBLY AND METHOD FOR OPERATING A FUEL CELL ASSEMBLY
SYSTÈME DE PILES À COMBUSTIBLE ET PROCÉDÉ DE FONCTIONNEMENT D'UN SYSTÈME DE PILES À COMBUSTIBLE

(30) Priorität: 01.08.2014 EP 14179498
(43) Veröffentlichungstag der Anmeldung: 29.03.2017
(73) Patentinhaber: Siemens Aktiengesellschaft, 80333 München (DE)
(72) Erfinder: BRANDT, Torsten, 91301 Forchheim (DE); DATZ, Armin, 91099 Poxdorf (DE); HAMMERSCHMIDT, Albert, 91056 Erlangen (DE); LATZEL, Silke, 91077 Kleinsendelbach (DE); LERSCH, Josef, 91336 Heroldsbach (DE); MATTEJAT, Arno, 91056 Erlangen (DE)
(86) Internationale Anmeldenummer: PCT/EP2015/067341
(87) Internationale Veröffentlichungsnummer: WO 2016/016288

(56) Entgegenhaltungen:
- US-A1- 2006 127 738
- US-A1- 2009 162 734
- US-A1- 2010 000 679

## Beschreibung

Die Erfindung betrifft eine Brennstoffzellenanordnung mit mindestens einer PEM-Brennstoffzelle zur Erzeugung von elektrischer Energie aus den Reaktandengasen Wasserstoff und Sauerstoff, umfassend mindestens eine Membran-Elektroden-Einheit, die eine mit Platin-Elektroden beschichtete Membran sowie beidseitig davon positioniert je eine poröse Gasdiffusionsschicht aufweist, oder die eine Membran sowie beidseitig davon positioniert je eine poröse Gasdiffusionsschicht, die mit einer Platin-Elektrode beschichtet ist, aufweist, umfassend weiterhin Bipolarplatten, die an den Gasdiffusionsschichten anliegen und im Betrieb durch ein Kühlmedium durchströmt sind. Die Erfindung betrifft weiterhin ein Verfahren zum Betreiben einer solchen Brennstoffzellenanordnung.

In PEM-Brennstoffzellen werden aus Wasserstoff und Sauerstoff in einem elektrochemischen Prozess Strom, Wärme und Wasser gebildet. Der prinzipielle Aufbau ist derart gestaltet, dass sich an eine Membran-Elektroden-Einheit (engl. membrane electrode assembly, MEA) Gasräume und Kühlräume in sogenannten Bipolarplatten anschließen. Die Membran-Elektroden-Einheit enthält insbesondere eine protonenleitende Membran, die beidseitig mit Platin-Elektroden (Katalysatorschicht) beschichtet ist. Diese sind wiederum von je einer gasdurchlässigen, elektronenleitenden Gasdiffusionsschicht bedeckt. Alternativ kann auch die Gasdiffusionsschicht auf einer der Membran zugewandten Seite mit der Platin-Elektrode (Katalysatorschicht) beschichtet sein. Die Gasdiffusionsschicht hat zudem die Aufgabe, das Produktwasser kathodenseitig aus der Entstehungszone an der Grenzschicht zu der Platin-Elektrode und der Membran zu entfernen. Zu diesem Zweck wird die Gasdiffusionsschicht, welche üblicherweise aus Kohlefasermaterial (Kohlepapier, Kohlefasergewebe oder Vlies) hergestellt ist, oberflächlich, d.h. auf den Kohlefasern bzw. in den Hohlräumen hydrophob gemacht.

Da in der Regel die im Brennstoffzellenbetrieb erzeugte Wärme durch einen Kühlmedienstrom, insbesondere einen Kühlwasserstrom, aus der Bipolarplatte entfernt wird, entsteht in der Bipolarplatte vom Kühlmediumeintritt zum Kühlmediumaustritt ein Wärmegradient, d.h. im Bereich des Kühlmediumaustritts herrscht eine höhere Temperatur als beim Kühlmediumeintritt. Häufig befindet sich im Bereich des Kühlmediumaustritts auch der Reaktandenaustritt (Sauerstoff und Wasserstoff). Auf der Sauerstoffseite entsteht eine große Menge von Produktwasser, das vollständig aus der Gasdiffusionssicht ausgebracht werden muss. Auf der Wasserstoffseite kann in diesem Bereich auf Grund der sehr guten Strömung der Wasserstoff effektiv umgesetzt werden. Dadurch entsteht im Bereich der Umsetzung des Wasserstoffs, der bereits durch den Kühlmediumstrom erwärmt ist, zusätzliche Abwärme, die zu weiterer Temperaturerhöhung führen kann.

Im Idealfall gibt es einen gleichmäßig ansteigenden Temperaturgradienten zwischen Kühlmediumeintritt und -austritt mit wenig oder gar keinen Temperaturerhöhungen an den Ecken oder Kanten der Bipolarplatte. In der Realität können jedoch an strömungstechnisch kritischen Stellen (wie z.B. Totzonen, Ecken) deutliche Temperaturerhöhungen (beispielsweise 10 bis 20 Grad K im Vergleich zum Kühlmediumaustritt) auftreten. Dieser Effekt kann in diesen kritischen Bereichen noch verstärkt werden, wenn die Kühlwasserdurchströmung der Bipolarplatte z.B. auf Grund von Fehlern (Verstopfung von Kühlkanälen, unbeabsichtigte Reduzierung der Kühlwasserpumpenleistung etc.) deutlich herabgesetzt wird. Im Extremfall kann dies durch verschiedene Mechanismen (beispielsweise niedrige Feuchte - Bildung von Wasserstoffperoxid und dadurch chemischer Angriff der Membran, mechanische Belastung durch Feucht-/Trockenzyklen) zur mechanischen Schwächung der Membran oder Dickenreduzierung bis hin zur Lochbildung führen, was zum Ausfall der Zelle und damit des gesamten Brennstoffzellenstacks führt.

Das Problem wird derzeit üblicherweise behandelt, indem versucht wird durch eine geeignete Optimierung der Strömungsgeometrie der Bipolarplatte derartige heiße Stellen zu vermeiden.

Ein anderer Lösungsansatz ist in US 8,617,760 B2 beschrieben. Gemäß diesem Dokument wird die protonenleitende Membran in kritischen Bereichen durch Einlagerung von Metallionen deaktiviert.

Aus der US 2009/0162734 A1 ist eine Brennstoffzellenanordnung mit einer PEM-Brennstoffzelle bekannt, bei der über den gesamten Randbereich der Membran-Elektroden-Einheit, d.h. den gesamten Bereich um den äußeren Umfang der Membran-Elektroden-Einheit, durch eine Harzschicht der Zugang mindestens eines der Reaktandengasee zur Membran blockiert ist. Die Platin-Elektrode weist dabei eine geringere Fläche als die Gasdiffusionsschicht auf, wobei über den gesamten Randbereich der Membran-Elektroden-Einheit die Gasdiffusionsschicht über der Platin-Elektrode übersteht. Durch diesen Überstand kann in Verbindung mit einer um den gesamten Randbereich der Membran-Elektroden-Einheit verlaufenden Dichtung und der um den gesamten Randbereich der Membran-Elektroden-Einheit verlaufenden Harzschicht die Kontaktierung zwischen der Gasdiffusionsschicht und der Membran-Elektroden-Einheit sowie deren Abdichtung verbessert werden.

Aus der US 2006/127738 A1 ist ein Brennstoffzellenaufbau bekannt, in dem über den gesamten Randbereich der Membran-Elektroden-Einheit ein Kleber zwischen der Membran und den Gasdiffusionsschichten angeordnet ist. Als Kleber können zum Beispiel Acryl oder thermoplastische Elastomere verwendet werden. Die Anwesenheit des Klebers reduziert die Dehnbeanspruchung an den Rändern der Membran, die nicht durch Elektroden unterstützt werden. Der Kleber wirkt als Dichtung und verhindert somit eine chemische Degradierung der Membran. Da die Gasdiffusionsschichten porös sind, kann der Kleber in die Poren der Gasdiffusionsschichten eindringen.

Der Erfindung liegt die Aufgabe zugrunde, bei vorgegebener Geometrie der Bipolarplatte und ohne größere Einbußen bei der Erzeugung der elektrischen Energie Maßnahmen im Bereich der Membran-Elektroden-Einheit zu definieren, welche die o.g. Fehler verhindern.

Die Aufgabe wird erfindungsgemäß gelöst durch eine Brennstoffzellenanordnung nach Anspruch 1 mit mindestens einer PEM-Brennstoffzelle zur Erzeugung von elektrischer Energie aus den Reaktandengasen Wasserstoff und Sauerstoff, umfassend mindestens eine Membran-Elektroden-Einheit, die eine mit Platin-Elektroden beschichtete Membran sowie beidseitig davon positioniert je eine poröse Gasdiffusionsschicht aufweist, umfassend weiterhin Bipolarplatten, die an den Gasdiffusionsschichten anliegen und im Betrieb durch ein Kühlmedium durchströmt sind, wobei für einen Teil eines Randbereichs der Membran-Elektroden-Einheit der Zugang mindestens eines der Reaktandengase zur Membran durch eine mechanische Sperre blockiert ist und für einen anderen Teil des Randbereichs der Membran-Elektroden-Einheit der Zugang des mindestens einen der Reaktandengase zur Membran nicht durch eine mechanische Sperre blockiert ist.

Die Aufgabe wird weiterhin erfindungsgemäß gelöst durch ein Verfahren zum Betreiben einer derartigen Brennstoffzellenanlage, wobei für einen Teil eines Randbereichs der Membran-Elektroden-Einheit der Zugang mindestens eines der Reaktandengase zur Membran durch eine mechanische Sperre blockiert wird und für einen anderen Teil des Randbereichs der Membran-Elektroden-Einheit der Zugang des mindestens einen der Reaktandengase zur Membran nicht durch eine mechanische Sperre blockiert wird.

Die im Hinblick auf die Brennstoffzelle nachstehend angeführten Vorteile und bevorzugten Ausgestaltungen lassen sich sinngemäß auf das Verfahren übertragen.

Wie für den Fachmann offensichtlich ist, lassen sich die im Hinblick auf die Brennstoffzelle und das Verfahren nachstehend angeführten Vorteile und bevorzugten Ausgestaltungen auch auf eine Brennstoffzelle übertragen, bei der die Gasdiffusionsschicht mit der Platin-Elektrode (Katalysatorschicht) beschichtet ist.

Die Erfindung basiert auf der Idee durch die mechanische Sperre gezielt an thermisch kritischen Stellen zu verhindern, dass die Reaktandengase Wasserstoff und/oder Sauerstoff die Elektrode erreichen können. Auf diese Weise lässt sich eine elektrochemische Reaktion an der Platin-Elektrode vermeiden, die entweder durch die Erzeugung von Wärme oder Potential zu einer Schwächung bzw. Beschädigung der Membran im betrachteten "gefährdeten" Bereich führt. Durch die Einbringung der mechanischen Sperre in "gefährdete" Bereiche (d.h. Bereiche, die möglicherweise zu heiß oder anderweitig geschädigt werden können) lässt sich auch bei vorgegebenem Bipolarplatten-Design ein ausfallfreier Betrieb realisieren. In den anderen Randbereichen ohne mechanische Sperre kann dagegen weiterhin eine elektrochemische Reaktion an der Platin-Elektrode erfolgen, so dass die vorgenannten Maßnahmen ohne größere Einbußen bei der Erzeugung der elektrischen Energie in der Brennstoffzelle möglich sind.

Vorzugsweise ist die mechanische Sperre an der Membran-Elektroden-Einheit im Bereich eines Kühlmediumaustritts aus der Bipolarplatte oder an thermisch belasteten Stellen der Bipolarplatte vorgesehen. Auf Grund des Temperaturgradients zwischen dem Kühlmediumeintritt und dem Kühlmediumaustritt der Bipolarplatte liegt insbesondere im Bereich des Kühlmediumaustritts eine erhöhte Gefahr vor Überhitzung vor.

Im Hinblick auf eine effiziente Wirkung der mechanischen Sperre ist gemäß einer bevorzugten Ausgestaltung die mechanische Sperre zwischen der Gasdiffusionsschicht und der Membran-Elektroden-Einheit angeordnet. Somit kann das Reaktandengas sich in der Gasdiffusionsschicht verteilen, erreicht jedoch an den kritischen Stellen nicht die Platin-Elektrode der Membran-Elektroden-Einheit.

Vorteilhafterweise ist die mechanische Sperre in diesem Fall eine gasundurchlässige Folie mit einer geringen Dicke, so dass die Folie störungsfrei zwischen der Gasdiffusionsschicht und der Membran-Elektroden-Einheit angebracht werden kann. Die Folie ist beispielsweise aus Teflon ausgebildet. Wesentlich für die Materialauswahl auf der Kathodenseite ist hierbei eine gute Sauerstoffbeständigkeit.

Gemäß einer weiteren bevorzugten Ausgestaltung ist die mechanische Sperre in den Poren der Gasdiffusionsschicht enthalten. Diese Ausgestaltung zeichnet sich durch konstruktive Änderungen lediglich an der Gasdiffusionsschicht aus, alle anderen Komponenten der Brennstoffzelle bleiben unverändert. Hierbei ist die mechanische Sperre bevorzugt ein Acrylkleber oder ein Fluorthermoplast. Die mechanische Sperre ist hierbei ein aus einem Polymer-Füllstoff, z.B. aus Fluorthermoplast ausgebildet, der durch eine entsprechende thermische Behandlung eingebracht wird. Auf der Kathodenseite ist entsprechende Sauerstoffbeständigkeit notwendig.

Vorzugsweise weist die Platin-Elektrode eine geringere Fläche als die Gasdiffusionsschicht auf, wobei für einen Teil eines Randbereichs der Gasdiffusionsschicht die Platin-Elektrode ausgespart ist und durch die mechanische Sperre ersetzt ist. Hierdurch wird erreicht, dass sich im Bereich der thermisch kritischen Stellen kein Platinkatalysator befindet, so dass auch kein elektrochemisches Potential für die Entstehung von Wasserstoffperoxid vorhanden sein kann. Eine doppelte Sicherheit wird gewährleistet, indem die Stelle an der Oberfläche der Membran, an der die Platin-Elektrode weggelassen ist, durch die mechanische Sperre überdeckt ist.

Ein Ausführungsbeispiel der Erfindung wird anhand einer Zeichnung näher erläutert. Hierin zeigen:
- FIG 1: eine erste Draufsicht auf eine Membran-Elektroden-Einheit und eine aufliegende Gasdiffusionsschicht, wobei ein erster, beispielhafter, kritischer Bereich gekennzeichnet ist,
- FIG 2: eine zweite Draufsicht auf eine Membran-Elektroden-Einheit und eine aufliegende Gasdiffusionsschicht, wobei ein zweiter, beispielhafter, kritischer Bereich gekennzeichnet ist,
- FIG 3: im Querschnitt eine erste Ausführung einer Brennstoffzelle,
- FIG 4: im Querschnitt eine zweite Ausführung einer Brennstoffzelle, und
- FIG 5: im Querschnitt eine dritte Ausführung einer Brennstoffzelle.

Gleiche Bezugszeichen haben in den verschieden Figuren die gleiche Bedeutung.

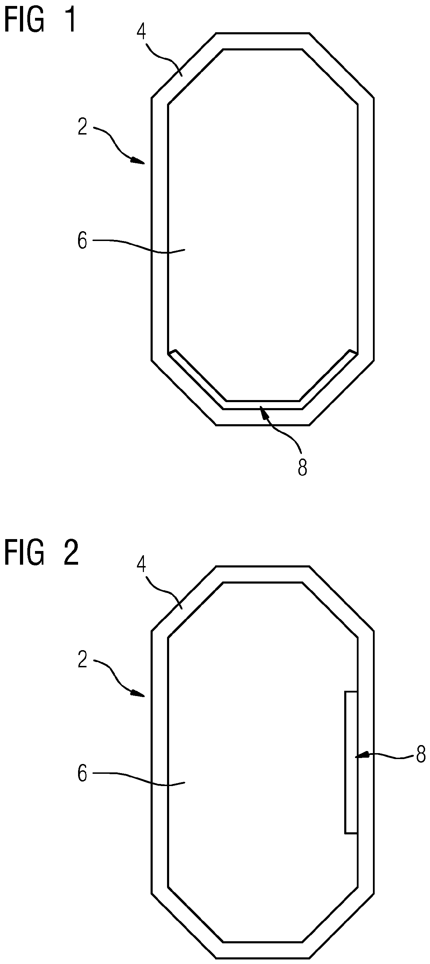

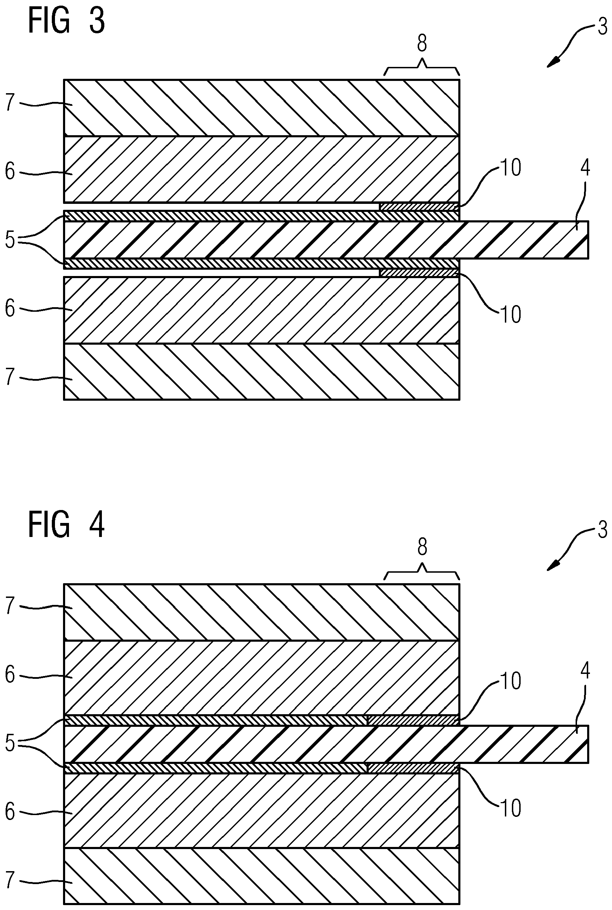

Aus FIG 1 und FIG 2 ist jeweils eine Membran-Elektroden-Einheit 2 entnehmbar, welche Teil einer hier nicht näher gezeigten Brennstoffzellenanordnung 3 ist, die im gezeigten Ausführungsbeispiel aus einer einzigen PEM-Brennstoffzelle besteht. Die PEM-Brennstoffzelle 3 ist im Querschnitt in FIG 3 bis FIG 5 dargestellt.

Die Membran-Elektroden-Einheit 2 umfasst eine protonenleitende Membran 4, die beidseitig mit einer hier nicht ersichtlichen Katalysatorschicht aus Platin, die eine Platin-Elektrode 5 bildet, beschichtet ist (siehe FIG 3 bis FIG 5). Beidseitig der Membran 4 ist je eine Gasdiffusionsschicht 6 aufgelegt, welche die Platin-Elektrode 5 kontaktiert. Alternativ kann die Katalysatorschicht aus Platin, die eine Platin-Elektrode 5 bildet, auch auf der der Membran 4 zugewandten Seite der Gasdiffusionsschicht 6 aufgebracht sein.

Die Brennstoffzelle 3 umfasst zudem angrenzend an die Gasdiffusionsschicht 6 eine aus FIG 3 bis FIG 5 ersichtliche Bipolarplatte 7 (in Wirklichkeit ist zumindest teilweise ein Raum zwischen der Bipolarplatte 7 und der Gasdiffusionsschicht 6 vorhanden), welche im Betrieb durch ein Kühlmedium, insbesondere Kühlwasser, durchströmt ist. Dadurch wird in der Membran-Elektroden-Einheit 2 entstehende Wärme abtransportiert.

In FIG 1 und FIG 2 sind mit dem Bezugszeichen 8 zwei unterschiedlich angeordnete beispielhafte kritische Stellen gekennzeichnet, an denen mit erhöhter Wahrscheinlichkeit eine Störung der Funktion der Membran 6 oder eine lokale Zerstörung der Membran 6 auftreten kann. Beispielsweise liegt eine solche kritische Stelle 8 beim Kühlmediumaustritt aus der Bipolarplatte 7, wie dies in FIG 1 gezeigt ist. Die kritischen Stellen 8 befinden sich dabei stets im Randbereich der Membran-Elektroden-Einheit 2 bzw. der Gasdiffusionsschicht 6.

Unter Randbereich wird hierbei der Bereich um den äußeren Umfang der Membran-Elektroden-Einheit 2 verstanden.

In FIG 3 ist eine erste Anordnung der Brennstoffzelle 3 gezeigt, bei der an einer kritischen Stelle 8 im Randbereich eine mechanische Sperre 10 in Form einer dünnen Folie zwischen der Membran-Elektroden-Einheit 2 und der Gasdiffusionsschicht 6 angebracht ist. Diese verhindert, dass das jeweilige Reaktandengas Wasserstoff und/oder Sauerstoff die Platin-Elektrode 5 erreicht.

In FIG 4 ist ebenfalls eine folienartige mechanische Sperre 10 zwischen der Membran-Elektroden-Einheit 2 und der Gasdiffusionsschicht 6 vorgesehen, mit dem Unterschied zu FIG 3, dass an der kritischen Stelle 8 die Platin-Elektrode 5 ausgespart ist und durch die Folie 10 ersetzt ist.

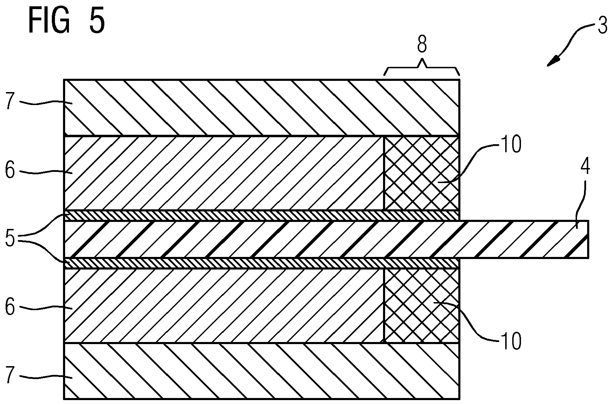

In FIG 5 ist eine dritte alternative Ausführung der Brennstoffzelle 3 dargestellt, bei der die poröse Gasdiffusionsschicht 6 mit der mechanischen Sperre 10 aufgefüllt ist und zwar nur im Bereich der kritischen Stelle 8. Die mechanischen Sperre 10 ist hierbei eine Masse z.B. aus einem thermoplastischen, fluorierten Polymerfüllstoff, einem Acrylkleber.

## Patentansprüche

1. Brennstoffzellenanordnung (3) mit mindestens einer PEM-Brennstoffzelle zur Erzeugung von elektrischer Energie aus den Reaktandengasen Wasserstoff und Sauerstoff, umfassend mindestens eine Membran-Elektroden-Einheit (2), die eine mit Platin-Elektroden (5) beschichtete Membran (4) sowie beidseitig davon positioniert je eine poröse Gasdiffusionsschicht (6) aufweist, umfassend weiterhin Bipolarplatten (7), die an den Gasdiffusionsschichten (6) anliegen und im Betrieb durch ein Kühlmedium durchströmt sind,
**dadurch gekennzeichnet, dass** für einen Teil eines Randbereichs der Membran-Elektroden-Einheit (2) der Zugang mindestens eines der Reaktandengase zur Membran (4) durch eine mechanische Sperre (10) blockiert ist und für einen anderen Teil des Randbereichs der Membran-Elektroden-Einheit (2) der Zugang des mindestens einen der Reaktandengase zur Membran (4) nicht blockiert ist, wobei der Randbereich der Bereich um den äußeren Umfang der Membran-Elektroden-Einheit (2) ist.

2. Brennstoffzellenanordnung (3) mit mindestens einer PEM-Brennstoffzelle zur Erzeugung von elektrischer Energie aus den Reaktandengasen Wasserstoff und Sauerstoff, umfassend mindestens eine Membran-Elektroden-Einheit (2), die eine Membran (4) sowie beidseitig davon positioniert je eine poröse Gasdiffusionsschicht (6), die mit einer Platin-Elektrode (5) beschichtet ist, aufweist,
umfassend weiterhin Bipolarplatten (7), die an den Gasdiffusionsschichten (6) anliegen und im Betrieb durch ein Kühlmedium durchströmt sind,
**dadurch gekennzeichnet, dass** für einen Teil eines Randbereichs der Membran-Elektroden-Einheit (2) der Zugang mindestens eines der Reaktandengase zur Membran (4) durch eine mechanische Sperre (10) blockiert ist und für einen anderen Teil des Randbereichs der Membran-Elektroden-Einheit (2) der Zugang des mindestens einen der Reaktandengase zur Membran (4) nicht blockiert ist, wobei der Randbereich der Bereich um den äußeren Umfang der Membran-Elektroden-Einheit (2) ist.

3. Brennstoffzelle (3) nach Anspruch 1 oder 2,
**dadurch gekennzeichnet, dass** die mechanische Sperre (10) an der Membran-Elektroden-Einheit (2) im Bereich eines Kühlmediumaustritts aus der Bipolarplatte (7) oder an thermisch belasteten Stellen der Bipolarplatte (7) vorgesehen ist.

4. Brennstoffzelle (3) nach Anspruch 1, 2 oder 3,
**dadurch gekennzeichnet, dass** die mechanische Sperre (10) zwischen der Gasdiffusionsschicht (6) und der Membran-Elektroden-Einheit (2) angeordnet ist.

5. Brennstoffzelle (3) nach Anspruch 4,
**dadurch gekennzeichnet, dass** die mechanische Sperre (10) eine gasundurchlässige Folie ist.

6. Brennstoffzelle (3) nach Anspruch 1, 2 oder 3,
**dadurch gekennzeichnet, dass** die mechanische Sperre (10) in den Poren der Gasdiffusionsschicht (6) enthalten ist.

7. Brennstoffzelle (3) nach Anspruch 6,
**dadurch gekennzeichnet, dass** die mechanische Sperre (10) ein Acrylkleber oder ein Fluorthermoplast ist.

8. Brennstoffzelle (3) nach einem der vorhergehenden Ansprüche,
**dadurch gekennzeichnet, dass** die Platin-Elektrode (5) eine geringere Fläche als die Gasdiffusionsschicht (6) aufweist, wobei für einen Teil eines Randbereichs der Gasdiffusionsschicht (6) die Platin-Elektrode (5) ausgespart ist und durch die mechanische Sperre (10) ersetzt ist.

9. Verfahren zum Betreiben einer Brennstoffzellenanordnung (3) nach einem der vorhergehenden Ansprüche,
**dadurch gekennzeichnet, dass** für einen Teil eines Randbereichs der Membran-Elektroden-Einheit (2) der Zugang mindestens eines der Reaktandengase zur Membran (4) durch eine mechanische Sperre (10) blockiert wird und für einen anderen Teil des Randbereichs der Membran-Elektroden-Einheit der Zugang des mindestens einen der Reaktandengase zur Membran nicht blockiert wird.

## Claims

1. Fuel cell assembly (3) with at least one PEM fuel cell for generating electrical energy from the reactant gases hydrogen and oxygen, comprising at least one membrane/electrode unit (2) which has a membrane (4) coated with platinum electrodes (5) and has, respectively positioned on each side thereof, a porous gas diffusion layer (6), further comprising bipolar plates (7) which lie against the gas diffusion layers (6) and through which, during operation, a coolant flows,
**characterised in that**, for a part of an edge region of the membrane/electrode unit (2), the access by at least one of the reactant gases to the membrane (4) is blocked by a mechanical block (10) and for another part of the edge region of the membrane/electrode unit (2), the access by the at least one of the reactant gases to the membrane (4) is not blocked, wherein the edge region is the region round the outer periphery of the membrane/electrode unit (2).

2. Fuel cell assembly (3) with at least one PEM fuel cell for generating electrical energy from the reactant gases hydrogen and oxygen, comprising at least one membrane/electrode unit (2) which has a membrane (4) and, respectively positioned on each side thereof, a porous gas diffusion layer (6) which is coated with a platinum electrode (5), further comprising bipolar plates (7) which lie against the gas diffusion layers (6) and through which, during operation, a coolant flows, **characterised in that**, for a part of an edge region of the membrane/electrode unit (2), the access by at least one of the reactant gases to the membrane (4) is blocked by a mechanical block (10) and for another part of the edge region of the membrane/electrode unit (2), the access by the at least one of the reactant gases to the membrane (4) is not blocked, wherein the edge region is the region round the outer periphery of the membrane/electrode unit (2).

3. Fuel cell (3) according to claim 1 or 2,
**characterised in that** the mechanical block (10) is provided at the membrane/electrode unit (2) in the region of a coolant exit from the bipolar plate (7) or at thermally loaded sites of the bipolar plate (7).

4. Fuel cell (3) according to claim 1, 2 or 3,
**characterised in that** the mechanical block (10) is arranged between the gas diffusion layer (6) and the membrane/electrode unit (2).

5. Fuel cell (3) according to claim 4,
**characterised in that** the mechanical block (10) is a gas-impermeable film.

6. Fuel cell (3) according to claim 1, 2 or 3,
**characterised in that** the mechanical block (10) is contained in the pores of the gas diffusion layer (6).

7. Fuel cell (3) according to claim 6,
**characterised in that** the mechanical block (10) is an acrylic adhesive or a fluorothermoplastic.

8. Fuel cell (3) according to one of the preceding claims, **characterised in that** the platinum electrode (5) has a smaller area than the gas diffusion layer (6), wherein for a part of an edge region of the gas diffusion layer (6), the platinum electrode (5) is recessed and is replaced by the mechanical block (10).

9. Method for operating a fuel cell assembly (3) according to one of the preceding claims,
**characterised in that**, for a part of an edge region of the membrane/electrode unit (2), the access by at least one of the reactant gases to the membrane (4) is blocked by a mechanical block (10) and for another part of the edge region of the membrane/electrode unit (2), the access by the at least one of the reactant gases to the membrane (4) is not blocked.

## Revendications

1. Agencement (3) de piles à combustible ayant au moins une pile à combustible PEM pour produire de l'énergie électrique à partir des gaz réactifs hydrogène et oxygène, comprenant au moins une unité (2) membrane-électrodes, qui a une membrane (4) revêtue d'électrodes (5) en platine, ainsi que, placée de part et d'autre de celle-ci, respectivement une couche (6) poreuse de diffusion des gaz, comprenant, en outre, des plaques (7) bipolaires, qui s'appliquent aux couches (6) de diffusion de gaz et dans lesquelles passe, en fonctionnement, un fluide de refroidissement,
**caractérisé en ce que**, pour une partie d'une région de bord de l'unité (2) membrane-électrodes, l'accès d'au moins l'un des gaz réactifs à la membrane (4) est bloqué par un blocage (10) mécanique et, pour une autre partie de la région de bord de l'unité (2) membrane-électrodes, l'accès du au moins l'un des gaz réactifs à la membrane (4) n'est pas bloqué, la région de bord étant la région autour du pourtour extérieur de l'unité (2) membrane-électrodes.

2. Agencement (3) de piles à combustible ayant au moins une pile à combustible PEM pour produire de l'énergie électrique à partir des gaz réactifs hydrogène et oxygène, comprenant au moins une unité (2) membrane-électrodes, qui a une membrane (4), ainsi que placée, de part et d'autre de celle-ci respectivement une couche (6) poreuse de diffusion de gaz, qui est revêtue d'une électrode (5) en platine,
comprenant, en outre, des plaques (7) bipolaires, qui s'appliquent aux couches (6) de diffusion de gaz et dans lesquelles passe, en fonctionnement, un fluide de refroidissement,
**caractérisé en ce que**, pour une partie d'une région de bord de l'unité (2) membrane-électrodes, l'accès d'au moins l'un des gaz réactifs à la membrane (4) est bloqué par un blocage (10) mécanique et, pour une autre partie de la région de bord de l'unité (2) membrane-électrodes, l'accès du au moins l'un des gaz réactifs à la membrane (4) n'est pas bloqué, la région de bord étant la région autour du pourtour extérieur de l'unité (2) membrane-électrodes.

3. Pile (3) à combustible suivant la revendication 1 ou 2, **caractérisé en ce que** le blocage (10) mécanique, sur l'unité (2) membrane-électrodes, est prévu dans la région d'une sortie de fluide de refroidissement de la plaque (7) bipolaire ou en des points exposés thermiquement de la plaque (7) bipolaire.

4. Pile (3) à combustible suivant la revendication 1, 2 ou 3,
**caractérisé en ce que** le blocage (10) mécanique est disposé entre la couche (6) de diffusion de gaz et l'unité (2) membrane-électrodes.

5. Pile (3) à combustible suivant la revendication 4, **caractérisé en ce que** le blocage (10) mécanique est une feuille perméable au gaz.

6. Pile (3) à combustible suivant la revendication 1, 2 ou 3,
**caractérisé en ce que** le blocage (10) mécanique est contenu dans les pores de la couche (6) de diffusion de gaz.

7. Pile (3) à combustible suivant la revendication 6, **caractérisé en ce que** le blocage (10) mécanique est une colle acrylique ou un thermoplastique fluoré.

8. Pile (3) à combustible suivant l'une des revendications précédentes,
**caractérisé en ce que** l'électrode (5) en platine a une surface plus petite que la couche (6) de diffusion de gaz, dans laquelle, sur une partie d'une région de bord de la couche (6) de diffusion de gaz, l'électrode (5) en platine est évidée et est remplacée par le blocage (10) mécanique.

9. Procédé pour faire fonctionner un agencement (3) de piles à combustible suivant l'une des revendications précédentes, **caractérisé en ce que**, sur une partie d'une région de bord de l'unité (2) membrane-électrodes, on bloque l'accès d'au moins l'un des gaz réactifs à la membrane (4) par un blocage (10) mécanique et sur une autre partie de la région de bord de l'unité membrane-électrodes, on ne bloque pas l'accès du au moins l'un des gaz réactifs à la membrane.
